# EUROPÄISCHE PATENTSCHRIFT

(11) **EP 2 060 356 B1**
(45) Veröffentlichungstag und Bekanntmachung des Hinweises auf die Patenterteilung: **21.06.2017**
(21) Anmeldenummer: 08167966.4
(22) Anmeldetag: 30.10.2008
(51) Int. Cl.: B23D 61/12

(54) **Sägeblatt mit einem Grundkörper und Zähnen mit Schneiden**
Saw blade with a carrier and teeth with cutting edges
Lame de scie dotée d'un corps de base et de dents ayant une lame de coupe

(30) Priorität: 15.11.2007 DE 102007054600
(43) Veröffentlichungstag der Anmeldung: 20.05.2009
(73) Patentinhaber: WIKUS-Sägenfabrik Wilhelm H. Kullmann GmbH & Co. KG, 34286 Spangenberg (DE)
(72) Erfinder: Kullmann, Jörg H., Dr., 34286 Spangenberg (DE); Kwanka, Werner, Dr., 86157 Augsburg (DE)
(74) Vertreter: REHBERG HÜPPE + PARTNER

(56) Entgegenhaltungen:
- EP-A1- 1 205 274
- EP-A2- 2 060 355
- WO-A1-94/20271
- DE-A1- 4 200 423
- DE-C- 374 338
- US-A- 4 848 205

## Beschreibung

### TECHNISCHES GEBIET DER ERFINDUNG

Die Erfindung betrifft ein Sägeblatt mit einem Grundkörper und ungeschränkten, symmetrisch zu einer Längsmittelebene durch den Grundkörper ausgebildeten Zähnen, die gemäß dem Oberbegriff des Anspruchs 1 mindestens eine sich wiederholende Zahngruppe bilden. Ein solches Sägeblatt ist aus DE 42 00 423 A bekannt. Das Sägeblatt besitzt einen bandförmigen Grundkörper, ist also als Sägeband ausgebildet, an dem Zähne ausgeformt sind. Der bandförmige Grundkörper einschließlich der Zähne kann beispielsweise aus einem Bimetallstreifen bestehen. Der bandförmige Grundkörper kann aber auch Sitze aufweisen, die zur Aufnahme von Formkörpern aus Hartmetall bestimmt sind. In der Regel werden diese Sitze durch Fräsen des bandförmigen Grundkörpers hergestellt. Die Formkörper aus Hartmetall werden als separate Elemente hergestellt und über die Sitze dauerhaft mit dem bandförmigen Grundkörper verbunden. Ein solches Sägeblatt wird bevorzugt in der Metallzerspanung, beim Trennen und Ablängen von Profilen aus Stahl, Aluminium und dergleichen eingesetzt.

### STAND DER TECHNIK

Ein Sägeblatt ist aus der deutschen Patentanmeldung DE 42 00 423 A1 bekannt. Das Sägeblatt ist zur Bearbeitung metallischer Werkstoffe ausgebildet und bestimmt. Es besitzt einen Grundkörper mit ungeschränkten Zähnen mit Schneiden, die in sich wiederholenden Zyklen vorgesehen sind. Die Zähne können aus den mit dem Grundkörper verbundenen Formkörpern aus Hartmetall bestehen. Jeder Zyklus besteht aus mindestens einer aus mindestens drei Zähnen bestehenden Zahngruppe mit Höhen- und Breitenstufung. Die Zähne können von Zahn zu Zahn abnehmende Höhe und dabei zunehmende Breite aufweisen. Alle Zähne sind symmetrisch zu einer Längsmittelebene durch den Grundkörper ausgebildet. Die Zähne besitzen geometrisch bestimmte Schneiden, d. h. jeder Zahn besitzt eine geometrisch bestimmte Form mit Spanwinkel, Freiwinkel usw. Die wirksamen Schneiden bzw. Schneidenabschnitte sämtlicher Zähne sind jeweils von einer abknickenden Schneidkante gebildet, deren innerer Abschnitt etwa senkrecht zur Längsmittelebene verläuft und an den sich nach außen in symmetrischer Anordnung zum Grundkörper hin geneigte Fasen anschließen. Die Schneidkante weist damit Ecken sowohl im Bereich der abknickenden Schneidkante wie auch am Übergang zwischen Fase und Flanke auf. Die Form der Schneidkanten kann durch Erhöhung der Anzahl der Abknickpunkte verändert werden, so dass theoretisch bei unendlich vielen Abknickpunkten letztendlich keine abknickende Schneidkante, sondern eine abgerundete Schneidkante an jedem Zahn entsteht. Der Herstellungsaufwand steigt jedoch mit der Anzahl der Abknickpunkte erheblich und verbietet eine Verwirklichung einer derartigen Formgebung mit einer abgerundeten Schneidkante.

Ein weiteres Sägeblatt ist aus der deutschen Patentanmeldung DE 43 00 622 A1 bekannt. Auch dieses Sägeblatt wird beim Trennen metallischer Werkstoffe eingesetzt. Die Zähne sind in sich wiederholenden Zyklen angeordnet. Jeder Zyklus weist mindestens eine aus mindestens zwei Zähnen bestehende Zahngruppe auf. Die beiden Zähne besitzen eine Höhen- und eine Breitenstufung und bilden eine erste Zahngruppe, deren wirksame Schneidkante von einer abknickenden Linie gebildet wird. Es ist eine zweite Gruppe von Zähnen vorgesehen. Die Zähne der zweiten Zahngruppe sind identisch ausgebildet. Die Zähne der zweiten Zahngruppe stellen die Zähne mit der größten Breite und geringsten Höhe dar. Die Zähne der zweiten Zahngruppe besitzen jeweils eine durchgehende ungeknickte Schneidkante und am Übergang zu den Flanken jeweils eine abgerundete Ecke, die die Oberfläche des Schnittkanals bearbeitet. Die Form der Schneidkanten kann durch Erhöhung der Anzahl der Abknickpunkte verändert werden, so dass theoretisch bei unendlich vielen Abknickpunkten letztendlich keine abknickende Schneidkante, sondern eine abgerundete Schneidkante an jedem Zahn entsteht. Die Zähne der ersten Zahngruppe und der zweiten Zahngruppe können abwechselnd angeordnet sein.

Ein weiteres Sägeblatt ist aus der deutschen Patentanmeldung DE 199 63 396 A1 bekannt. Auch dieses Sägeblatt wird beim Trennen metallischer Werkstoffe eingesetzt. Die Anzahl der Zähne im Zyklus beträgt hier mindestens 2. Die Zähne können aus den mit dem Grundkörper verbundenen Formkörpern aus Hartmetall bestehen. Die beiden Zähne besitzen eine Höhen- und eine Breitenstufung und bilden eine erste Zahngruppe. An jedem Zahn wird eine wirksame Schneidkante in Form einer abknickenden Linie gebildet wird. Es ist eine zweite Gruppe von Zähnen vorgesehen, die jeweils eine über die Breite gerade durchgehende Schneidkante aufweisen. Die Zähne der zweiten Zahngruppe sind identisch ausgebildet. Die Zähne der zweiten Zahngruppe stellen die Zähne mit der größten Breite und geringsten Höhe dar. Die Zähne der ersten Zahngruppe und der zweiten Zahngruppe können abwechselnd angeordnet sein.

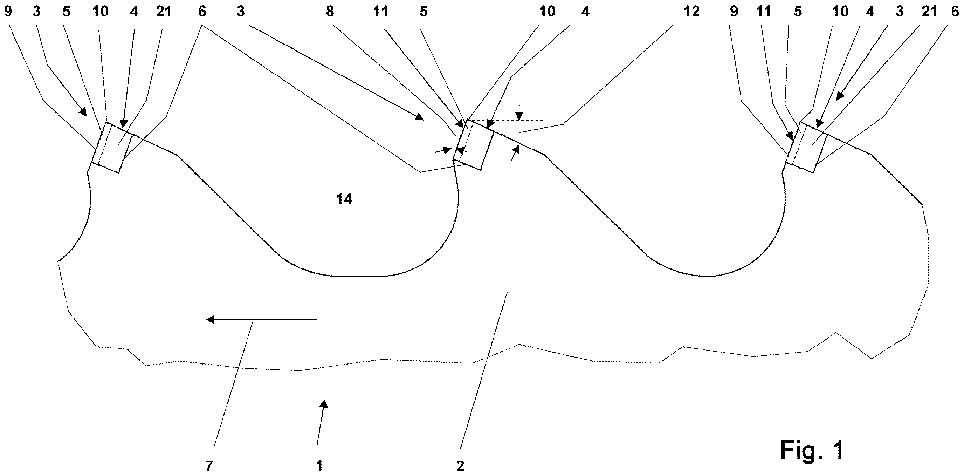

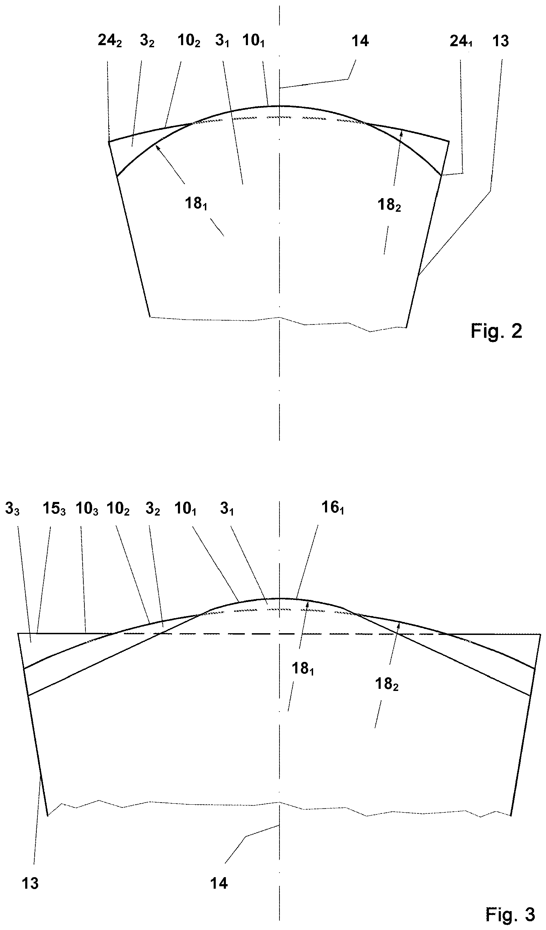

Ein weiteres Sägeblatt ist aus der deutschen Patentanmeldung DE 44 23 434 A1 bekannt. Es werden Sägeblätter in verschiedenen Ausführungen gezeigt. Übereinstimmendes Merkmal sämtlicher Ausführungen ist, dass die Flanken der Zähne bogenförmig konvex ausgebildet sind. Die Konfigurierung der Zähne der Ausführungsform der Fig. 1 zeigt ein Sägeblatt mit einem Grundkörper und ungeschränkten, symmetrisch zu einer Längsmittelebene durch den Grundkörper ausgebildeten Zähnen, die übereinstimmend in entsprechender Anzahl und ohne eine sich wiederholende Zahngruppe zu bilden, auf dem Grundkörper des Sägeblatts angeordnet sind. Die wirksamen Schneiden bzw. Schneidenabschnitte aller Zähne sind jeweils übereinstimmend von einer abknickenden Schneidkante aus gerade verlaufenden Abschnitten gebildet, deren innerer Abschnitt etwa senkrecht zur Längsmittelebene verläuft und an den sich nach außen eine zum Grundkörper hin geneigte Fase anschließt. Die Schneidkante weist damit Ecken sowohl im Bereich der abknickenden Schneidkante wie auch am Übergang zwischen Fase und Flanke auf. Eine in den Fig. 2 und 3 dargestellte andere Ausführungsform zeigt ein Sägeblatt mit einem Grundkörper und ungeschränkten, unsymmetrisch zu einer Längsmittelebene durch den Grundkörper ausgebildeten Zähnen. Die Zähne sind in mindestens einer sich wiederholenden Zahngruppe angeordnet, wobei die Zahngruppe zwei Zähne aufweist. Die Schneidkanten dieser Zähne sind nach Art der Vor- und Nachschneidertechnik angeordnet. Die Zähne werden beim Sägen eines Werkstücks exzentrisch belastet, wie dies ähnlich bei geschränkten Zähnen der Fall ist. Die Zähne sind asymmetrisch ausgebildet und angeordnet. Der asymmetrische Aufbau zweier aufeinander folgender Zähne ist spiegelbildlich zur Längsmittelebene verwirklicht, wobei die Schneidkanten hyperbolisch oder parabolisch gestaltet sind. Der Übergang zwischen Schneidkante und Flanke soll fließend ausgestaltet sein. Solche Sägeblätter werden besonders vorteilhaft bei der sägenden Bearbeitung von Kunststoffen eingesetzt, um am Werkstück nur minimal ausgeprägte Sägeriefen zu erzielen und gleichzeitig Eckenausbrüche des Sägeguts zu minimieren.

Aus dem US-Patent US 3,169,435 ist ein Sägeblatt mit aufgelöteten Zähnen aus Hartmetall bekannt. Es handelt sich um ungeschränkte, symmetrisch zu einer Längsmittelebene durch den Grundkörper ausgebildete gefaste Zähne, die in sich wiederholenden Zahngruppen aus zwei Zähnen bestehen, die in der bekannten Vor- und Nachschneidertechnik angeordnet sind. Die eine Art Zähne arbeitet im Mittelbereich, während die andere Art Zähne in den beiden Eckbereichen arbeitet. Die Zähne weisen eine Höhenstufung auf. Sämtliche Zähne weisen eine identische Breite auf, so dass auch eine Breitenstufung nicht vorliegt. Die Schneidkanten sämtlicher Zähne werden von gerade verlaufenden Schneidkantenabschnitten gebildet. Jeder Schneidkantenabschnitt geht in einen benachbarten Schneidkantenabschnitt unter Bildung eines Abknickpunktes bzw. einer Ecke über.

### AUFGABE DER ERFINDUNG

Der Erfindung liegt die Aufgabe zugrunde, ein Sägeblatt so weiterzubilden, dass es weniger verschleißanfällig ist und demzufolge eine verbesserte Standzeit oder eine erhöhte Leistung erbringt.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Das Sägeblatt weist einen Grundkörper und ungeschränkte, symmetrisch zu einer Längsmittelebene durch den Grundkörper ausgebildete Zähne auf. Die Zähne bilden mindestens eine sich wiederholende Zahngruppe, wobei die Zahngruppe mindestens zwei Zähne mit zumindest abschnittsweise abgerundeten Schneidkanten in zumindest einer Höhenstufung aufweist. Die zumindest abschnittsweise abgerundete Schneidkante des einen Zahns wird von mindestens einem ersten Radius und die zumindest abschnittsweise abgerundete Schneidkante des anderen Zahns von mindestens einem zweiten Radiusgebildet ist, wobei der erste Radius verschiedenen von dem zweiten Radius ist.

Es entspricht neueren Erkenntnissen der Anmelderin, dass auch solche Schneidkantenabschnitte, die nach der Theorie unwirksam sind, verschleißen können. Untersuchungen haben gezeigt, dass der auftretende Verschleiß kaum zwischen wirksamen und unwirksamen Schneidkantenabschnitten unterscheidet, sondern dass ein Verschleiß weitgehend durchgängig über die Länge der gesamten Schneidkante jedes Zahns festzustellen ist.

Eine Erklärung für dieses Phänomen könnte möglicherweise darin gesehen werden, dass es sich bei einem System aus Sägeblatt und Sägemaschine um ein vergleichsweise labiles System handelt, bei dem nur eine begrenzte Führung zwischen Sägeblatt und Werkstück auftritt, so dass das Sägeblatt beim Sägen auch Ausweichbewegungen aus seiner an sich geraden Führung heraus vornimmt. Solche Ausweichbewegungen können an Zähnen auftreten, die gerade in die Werkstückoberfläche aufgrund des überlagerten Vorschubs einwandern oder jedenfalls einwandern sollten. Hier kann das Sägeband auch entgegen der Vorschubrichtung von dem Werkstück abgelenkt werden und damit so auswandern, dass ein oder mehrere Zähne in der Zahngruppe zu diesem Zeitpunkt keine Arbeit ausführen, sondern gegenüber der Werkstückoberfläche zurücktreten bzw. zurückreichen. Aufgrund des fortschreitenden Vorschubs wird jedoch zu einem gewissen Zeitpunkt einer der Zähne in der Zahngruppe sich in die Werkstückoberfläche eingraben und dabei einen Span erzeugen bzw. abnehmen, der größer dimensioniert ist, als der Span, den der betreffende Zahn nach der Theorie streifenförmig allein aus dem Schnittkanal herauslösen sollte. Dieser verdickte Span besitzt auch eine größere Breite als der theoretische streifenförmige Span, woraus sich der Umstand erklären lässt, dass ein solcher Zahn zu diesem Zeitpunkt auch mit theoretisch unwirksamen Schneidkantenabschnitten arbeitet. Infolge der temporär erhöhten Belastung tritt ein verstärkter Verschleiß an der Schneidkante auf, der auch zum Abbröckeln oder Abbrechen von Bereichen der Schneidkante führen kann.

Die Erfindung baut auf einem Sägeblatt mit einem Grundkörper und ungeschränkten, symmetrisch zu einer Längsmittelebene durch den Grundkörper ausgebildeten Zähnen auf, die mindestens eine sich wiederholende Zahngruppe bilden. Es können auch mehrere Zahngruppen oder auch zusätzliche Einzelzähne an einem Sägeblatt vorgesehen sein. Dann können sich Zyklen ergeben. Die mindestens eine Zahngruppe weist jedenfalls mindestens zwei Zähne mit abgerundeten Schneidkanten oder mit abgerundeten Schneidkantenabschnitten auf, die zumindest in einer Höhenstufung angeordnet sind. Unter einer Höhenstufung wird eine Gestaltung von zwei oder mehr als zwei aufeinander folgenden Zähnen in der Zahngruppe verstanden, bei der die Zähne in der Projektion entgegen der Bandlaufrichtung unterschiedliche Höhen aufweisen. Dies bezieht sich in erster Linie auf unterschiedliche Höhen in der Längsmittelebene der Zähne. Unter einer Höhenstufung wird aber auch eine Gestaltung von zwei oder mehr als zwei aufeinander folgenden Zähnen in der Zahngruppe verstanden, bei der die Zähne zwar in der Längsmittelebene übereinstimmende Höhe besitzen, es aber Bereiche außerhalb der Längsmittelebene über die Zahnbreite gibt, an denen die Schneidkantenabschnitte der Zähne unterschiedliche Höhen aufweisen. Gleichzeitig mit der Höhenstufung ist auch eine Breitenstufung verwirklicht. Die mindestens zwei Zähne der Zahngruppe weisen eine solche Breitenstufung auf, bei der der Zahn mit der größten Höhe zugleich die geringste Breite aufweist. Die mindestens zwei Zähne der Zahngruppe, oder auch alle Zähne des Sägeblattes, können auch gleiche Breite aufweisen. Die Zähne sind ungeschränkt und werden beim Sägen durch Kräfte beansprucht, die symmetrisch in der Längsmittelebene wirken. Eine seitliche Auslenkung der Zähne, wie bei geschränkten Zähnen bekannt, wird damit vermieden.

Jeder der mindestens zwei Zähne in der Zahngruppe weist je eine abgerundete Schneidkante oder je einen abgerundeten Schneidkantenabschnitt auf. Der Begriff "Schneidkante" bezeichnet die gesamte Schneidkante zwischen den Flanken des Zahns. Unter dem Begriff "Schneidkantenabschnitt" wird ein Teil dieser Schneidkante verstanden. Die "abgerundete" Form ist die Gestalt der Schneidkante oder des Schneidkantenabschnitts, die sich in einer Ansicht entgegen der Bandlaufrichtung oder auch senkrecht zur Spanfläche des Zahns darbietet. Die abgerundeten Schneidkanten oder die abgerundeten Schneidkantenabschnitte der mindestens zwei Zähne in der Zahngruppe sind zwar beide rund gestaltet, weisen jedoch unterschiedliche Radien auf. Die abgerundete Schneidkante oder der abgerundete Schneidkantenabschnitt des einen Zahns ist von mindestens einem ersten Radius und die abgerundete Schneidkante oder der abgerundete Schneidkantenabschnitt des anderen Zahns der Zahngruppe von mindestens einem zweiten, von dem ersten Radius verschiedenen Radius gebildet. Das Sägeblatt kann nur sich wiederholende Zahngruppen aus zwei solchen Zähnen aufweisen, insbesondere entsprechend der bekannten Vor- und Nachschneidetechnik. Das Sägeblatt kann aber auch zusätzliche Einzelzähne in oder außerhalb der Zahngruppe aufweisen. Schließlich kann das Sägeblatt auch mehrere Zahngruppen mit und ohne eingeschobene Einzelzähne aufweisen.

Die Schneidkante mindestens eines Zahns in der Zahngruppe, die aus mindestens zwei Zähnen besteht, kann aus mindestens zwei unterschiedlichen Radien zusammengesetzt sein.

Die beiden unterschiedlichen Radien schließen aneinander an und bilden zumindest einen wesentlichen Abschnitt der Schneidkante. Der Übergang der beiden Radien zueinander ist so gestaltet, dass auch hier eine Ecke möglichst vermieden bzw. nur schwach ausgebildet wird. Bei einem tangentialen Anschluss der beiden Radien einer Schneidkante oder eines Schneidkantenabschnitts aneinander wird eine Ecke gänzlich vermieden. Sinnvoll ist es, wenn die Schneidkanten sämtlicher Zähne der Zahngruppe aus mindestens zwei Radien zusammengesetzt sind. Der breiteste Zahn in der Zahngruppe bestimmt bekanntlich die Oberflächengüte des Werkstücks im Schnittkanal. Dieser breiteste Zahn sollte außen, also am Übergang zur Flanke, keine Ecke aufweisen. Scharfkantige Ecken oder Abknickpunkte mit einem Winkel wesentlich kleiner als 180°, also z. B. etwa 120° und kleiner, sollten auf jeden Fall vermieden werden.

Die zwei Radien der Schneidkante eines Zahns, die unter Vermeidung einer Ecke abgerundet sind, sollten aneinander anschließend vorgesehen sein, wobei der Anschluss insbesondere tangential erfolgen sollte.

Die abgerundete Schneidkante mindestens eines Zahns der Zahngruppe kann tangential in die Flanken des Zahns übergehend vorgesehen sein. Dies ist besonders sinnvoll für den Zahn der Zahngruppe, der die größte Breite besitzt. Aber auch bei den anderen Zähnen der Zahngruppe ist diese Ausbildung sinnvoll, denn sie trägt zur Verschleißminderung und damit zu einer Erhöhung der Lebensdauer bzw. Einsatzdauer des Sägeblatts bei.

Mindestens ein Zahn der Zahngruppe im Bereich des Zahnrückens kann eine in der einen Richtung abgerundete und in der anderen Richtung konvex gekrümmte Freifläche aufweisen.

Weitere vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Seitenansicht einer ersten beispielhaften Ausführungsform des neuen Sägeblatts.
- **Fig. 2**: zeigt die Spitzenbereiche der Zähne des Sägeblatts in einer ersten beispielhaften Ausführungsform in einer Ansicht entgegen der Bandlaufrichtung.
- **Fig. 3**: zeigt die Spitzenbereiche der Zähne des Sägeblatts in einer zweiten beispielhaften Ausführungsform in einer Ansicht entgegen der Bandlaufrichtung.
- **Fig. 4**: zeigt die Spitzenbereiche der Zähne eines nicht erfindungsgemäßigen Sägeblatts in einer Ansicht entgegen der Bandlaufrichtung.
- **Fig. 5**: zeigt die Spitzenbereiche der Zähne eines nicht erfindungsgemaßigen Sägeblatts in einer Ansicht entgegen der Bandlaufrichtung.
- **Fig. 6**: zeigt eine Seitenansicht einer zweiten beispielhaften Ausführungsform des neuen Sägeblatts.
- **Fig. 7**: zeigt eine Projektion eines ersten Ausführungsbeispiels von drei Zähnen in der Zahngruppe im Bereich der Schneidkanten.
- **Fig. 8**: zeigt eine Projektion eines zweiten Ausführungsbeispiels von vier Zähnen in der Zahngruppe entgegen der Bandlaufrichtung im Bereich der Schneidkanten.
- **Fig.** 9: zeigt eine Ansicht eines ersten beispielhaften Zahns entgegen der Bandlaufrichtung im Bereich der Schneidkante.
- **Fig. 10**: zeigt eine Ansicht eines zweiten beispielhaften Zahns entgegen der Bandlaufrichtung im Bereich der Schneidkante.
- **Fig. 11**: zeigt eine Ansicht eines dritten beispielhaften Zahns entgegen der Bandlaufrichtung im Bereich der Schneidkante.
- **Fig. 12**: zeigt eine Projektion eines dritten Ausführungsbeispiels von drei Zähnen in der Zahngruppe im Bereich der Schneidkanten in einer Ansicht entgegen der Bandlaufrichtung.
- **Fig. 13**: zeigt eine perspektivische Darstellung eines beispielhaften Zahns.
- **Fig. 14**: zeigt eine Schnittansicht des Zahns gemäß der Linie XIV-XIV in Fig. 13.
- **Fig. 15**: zeigt eine Projektion eines nicht erfindungsgemäßigen Ausführungsbeispiels von drei Zähnen in der Zahngruppe im Bereich der Schneidkanten in einer Ansicht entgegen der Bandlaufrichtung.
- **Fig. 16**: zeigt eine Projektion eines nicht erfindungsgemäßigen Ausführungsbeispiels von drei Zähnen in der Zahngruppe im Bereich der Schneidkanten in einer Ansicht entgegen der Bandlaufrichtung.

### FIGURENBESCHREIBUNG

**Fig. 1** zeigt eine erste beispielhafte Ausführungsform eines neuen Sägeblatt 1. Das in Fig. 1 teilweise dargestellte Sägeblatt 1 weist einen bandförmigen Grundkörper 2 auf, der in bekannter Weise rechteckigen Querschnitt besitzt. Die eine dargestellte Seite des Grundkörpers 2 trägt Zähne 3. Die Zähne 3 sind ungeschränkt und symmetrisch zu der Längsmittelebene 14 des Grundkörpers 2 ausgebildet und angeordnet. Die Zähne 3 besitzen eine größere Breite als der Grundkörper 2.

Die Zähne 3 werden von Formkörpern 4 gebildet. Jeder Formkörper 4 besteht zu seinem größeren Teil aus einem Träger 21 aus Hartmetall und weist auf einer Seite oder Fläche des Trägers 21 eine Schicht 5 auf, die aus einem Material bestehen kann, welches gleich hart oder vorzugsweise härter als das Hartmetall des Trägers 21 ist. Bevorzugt weist die Schicht 5 eine Härte von mindestens 5.000 HK (Knoophärte) auf. Die Formkörper 4 mit den Schichten 5 sind in Sitze 6 eingesetzt. Die Sitze 6 sowie die übrige Formgebung des bandförmigen Grundkörpers 2 auf der Seite, auf der die Zähne 3 angebracht werden, erfolgt vorzugsweise durch Fräsen. Die Formkörper 4 werden an den Sitzen 6 mit dem Material des Grundkörpers 2 dauerhaft verbunden, beispielsweise durch Schweißen oder Löten. Die Sitze 6 können so ausgeformt sein, dass jeder Formkörper 4 in zwei Richtungen formschlüssig aufgesetzt und gehalten ist. Es versteht sich, dass das Aufsetzen der Formkörper 4 so erfolgt, dass die Schichten 5 der Zähne 3 in Bandlaufrichtung 7 weisen.

Aus Fig. 1 ist erkennbar, dass die Formkörper 4, die die Zähne 3 bilden, mit negativem Spanwinkel 8 angeordnet sind. Die Spanwinkel 8 sämtlicher Zähne 3 können übereinstimmend ausgebildet sein. Es ist aber auch möglich, dass die negativen Spanwinkel 8 von Zahn 3 zu Zahn 3 variieren, so dass auf diese Weise Zahngruppen aus z. B. drei aufeinander folgenden Zähnen 3 gebildet sind, wobei sich die negativen Spanwinkel 8 an den jeweiligen Zähnen 3 in jeder Gruppe wiederholen. Der negative Spanwinkel 8 beträgt insbesondere zwischen -25° und 0°.

Aus Fig. 1 ist erkennbar, dass die Zähne 3 auch mit variabler Teilung angeordnet sein können. Die Zähne 3 sind weiterhin auch in einer Höhen- und einer Breitenstufung angeordnet. Jeder Zahn 3 besitzt an der freien Oberfläche der Schicht 5 eine Spanfläche 9, die an ihrem oberen Bereich in eine Schneidkante 10 übergeht bzw. in dieser Schneidkante 10 endet. Die oberen Bereiche der Spanfläche 9 und die Schneidkante 10 bilden zusammen je eine Schneide 11. Die die Zähne 3 bildenden Formkörper 4 sind mit einem Freiwinkel 12 angeordnet.

**Fig. 2** zeigt die Ausbildung von zwei Zähnen 3₁ und 3₂ in der Zahngruppe, also entsprechend der bekannten Vor- und Nachschneidertechnik. Der Zahn 3₁ weist eine kreisbogenförmig abgerundete Schneidkante 10₁ auf, die durch einen Radius 18₁ gebildet ist. Die Schneidkante 10₁ ist über ihre gesamte Erstreckung zwischen den Flanken 13 abgerundet ausgebildet, also ohne Ecken, Abknickpunkte oder dergleichen. Lediglich die Endpunkte der Schneidkante 10₁ werden von Ecken 24₁ gebildet. Der Zahn 3₂ weist eine kreisbogenförmig abgerundete Schneidkante 10₂ auf, die durch einen Radius 18₂ gebildet ist. Die Schneidkante 10₂ ist über ihre gesamte Erstreckung zwischen den Flanken 13 abgerundet ausgebildet, also ohne Ecken, Abknickpunkte oder dergleichen. Lediglich die Endpunkte der Schneidkante 10₂ werden von Ecken 24₂ gebildet. Die beiden Radien 18₁ und 18₂ sind also unterschiedlich. Die Mittelpunkte beiden Radien 18₁ und 18₂ liegen auf der Längsmittelebene 14. Die beiden Zähne 3₁ und 3₂ in der Zahngruppe weisen also bei Betrachtung einer übereinstimmenden Stelle über die Zahnbreite - beispielsweise an der Stelle der Längsmittelebene 14 - die beiden untereinander unterschiedlichen Radien 18₁ und 18₂ auf. Der Radius 18₂ ist größer als der Radius 18₁. Allgemein nimmt der Radius von einem Zahn 3 zu einem benachbarten Zahn 3 zu. Es ist aber auch möglich, dass der zunehmende Radius nur nicht-benachbarte Zähne 3 betrifft. Auch bei dieser Gestaltung ist die Verwirklichung einer Höhen- und Breitenstufung entsprechend der Vor- und Nachschneidertechnik wie dargestellt vorhanden.

**Fig. 3** zeigt die Ausbildung von drei Zähnen 3₁, 3₂ und 3₃ in der Zahngruppe. Der Zahn 3₁ besitzt eine Schneidkante 10₁, die aus einem Bogenstück 16₁ im Mittelbereich und jeweils einem geraden Stück in Richtung auf die Flanken 13 zusammengesetzt ist. Es ist also nur ein Bereich oder Teil der Schneidkante 10₁, also ein Scheidkantenabschnitt, abgerundet ausgebildet. Dieser Schneidkantenabschnitt ist mit dem Radius 18₁ gestaltet. Der Zahn 3₂ besitzt eine Schneidkante 10₂, die durchgängig oder insgesamt über ihre Erstreckung gemäß dem Radius 18₂ gestaltet ist. Die beiden Radien 18₁ und 18₂ sind unterschiedlich. Die Mittelpunkte beiden Radien 18₁ und 18₂ liegen auf der Längsmittelebene 14. Die beiden Zähne 3₁ und 3₂ in der Zahngruppe weisen also bei Betrachtung einer übereinstimmenden Stelle über die Zahnbreite - beispielsweise an der Stelle der Längsmittelebene 14 - die beiden untereinander unterschiedlichen Radien 18₁ und 18₂ auf. Dies gilt auch für zwei beliebige Zähne 3 in der Zahngruppe, beispielsweise für die Zähne 3₂ und 3₄ in einer Gruppe von vier aufeinanderfolgenden Zähnen 3. Der Zahn 3₃ weist eine Schneidkante 10₃ auf, die von einem über die gesamte Breite gerade verlaufenden Stück 15₃ gebildet ist. Der Zahn 3₃ ist also nicht abgerundet. Der Zahn 3₃ kann einmal in der Zahngruppe aus drei Zähnen 3 auftreten. Er kann aber auch in einer Zahngruppe aus vier Zähnen 3 doppelt vorgesehen sein, insbesondere regelmäßig geschachtelt, also nach jedem Zahn 3 mit abgerundeter Schneidkante 10 oder Schneidkantenabschnitt. Der Zahn 3₃ kann auch entfallen.

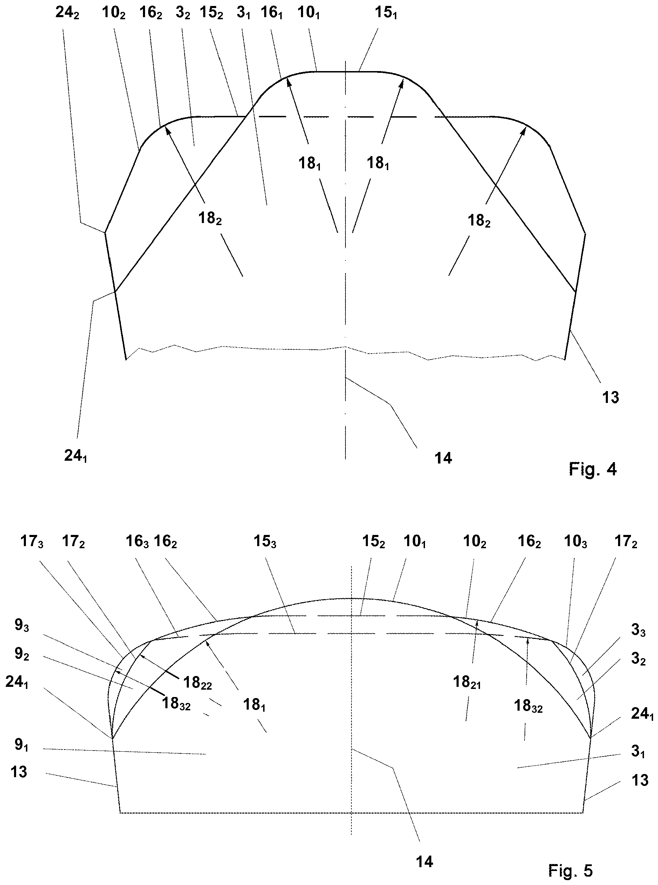

**Fig. 4** zeigt die Ausbildung von zwei Zähnen 3₁ und 3₂ in der Zahngruppe, also entsprechend der bekannten Vor- und Nachschneidertechnik. Der Zahn 3₁ weist eine Schneidkante 10₁ auf, die sich aus einem in der Mitte angeordneten geraden Stück 15₁, zwei Bogenstücken 16₁ und zwei geraden Stücken, die unter Bildung von Ecken 24₁ in die Flanken 13 einlaufen, zusammensetzt. Die Bogenstücke 16₁ der Schneidkante 10₁ sind mit dem Radius 18₁ abgerundet gestaltet. Der Zahn 3₂ weist eine Schneidkante 10₂ auf, die sich aus einem in der Mitte angeordneten geraden Stück 15₂, zwei Bogenstücken 16₂ und zwei geraden Stücken, die unter Bildung von Ecken 24₂ in die Flanken 13 einlaufen, zusammensetzt. Die Bogenstücke 16₂ der Schneidkante 10₂ sind mit dem Radius 18₂ abgerundet gestaltet. Die Mittelpunkte der beiden Radien 18₁ und 18₂ liegen auf der Längsmittelebene 14. Die beiden Zähne 3₁ und 3₂ in der Zahngruppe weisen also bei Betrachtung einer übereinstimmenden Stelle über die Zahnbreite - beispielsweise an der Stelle der Längsmittelebene 14 - die beiden übereinstimmenden unendlich großen Radien auf. Die beiden Zähne 3₁ und 3₂ in der Zahngruppe weisen bei Betrachtung einer nicht übereinstimmenden Stelle über die Zahnbreite die beiden untereinander unterschiedlichen Radien 18₁ und 18₂ auf. Die Bogenstücke 16₁ und 16₂ mit den beiden Radien 18₁ und 18₂ laufen tangential in die anschließenden geraden Stücke ein, so dass über die gesamte Erstreckung der Schneidkanten 10₁ und 10₂ Ecken oder Abknickpunkte vermieden werden. Auch bei dieser Gestaltung ist die Verwirklichung einer Höhen- und Breitenstufung entsprechend der Vor- und Nachschneidertechnik wie dargestellt vorhanden. Auch die Zwischenschaltung weiterer Zähne 3 in beliebiger Gestalt innerhalb der Zahngruppe ist möglich.

**Fig. 5** zeigt die Gestaltung der oberen Bereiche von drei Zähnen 3 einer Zahngruppe in ihrer gegenseitigen Projektion in einer Ansicht entgegen der Bandlaufrichtung 7. Es ist ein Zahn 3₁ erkennbar, dem entgegen der Bandlaufrichtung 7 ein zweiter Zahn 3₂ folgt, der wiederum von einem Zahn 3₃ gefolgt wird. Hieraus wird erkennbar, dass Zahngruppen aus drei Zähnen 3₁, 3₂, 3₃ gebildet sind. Diese Zahngruppen wiederholen sich.

Es ist erkennbar, dass der Zahn 3₁ eine Spanfläche 9₁ aufweist, die an ihrem oberen Ende in eine Schneidkante 10₁ übergeht. Die Schneidkante 10₁ ist mit dem Radius 18₁ insgesamt kreisbogenförmig ausgebildet und angeordnet und geht unter Bildung je einer Ecke 24₁ rechts und links in eine Flanke 13 über. Die Ecke 24₁ kann in der Projektion mit entsprechenden Ecken anderer Zähne 3 zusammenfallen. Die Flanken 13 und die zugehörigen Flankenwinkel stimmen an allen Zähnen 3₁, 3₂ und 3₃ überein.

Auch der folgende Zahn 3₂ besitzt eine Schneidkante 10₂. Die Formgebung der Schneidkante 10₂ ist aus einer Reihe von Radien 18₂₁ und 18₂₂ zusammengesetzt, so dass sich insgesamt die dargestellte abgerundete Form ergibt. Im Mittelbereich, also im Anschluss an die Längsmittelebene 14, besitzt die Schneidkante 10₂ ein gerades Stück 15₂. An dieses gerade Stück 15₂ schließt sich jeweils ein Bogenstück 16₂ an, welches den endlichen Radius 18₂₁ besitzt. Jedes Bogenstück 16₂ geht schließlich in je ein weiteres Bogenstück 17₂ mit dem Radius 18₂₂ über. Die Bogenstücke 16₂ und 17₂ weisen unterschiedliche Radien 18₂₁ und 18₂₂ auf. Der Übergang zwischen den Bogenstücken 16₂ und 17₂ erfolgt vorzugsweise mit gemeinsamer Tangente. Das Bogenstück 17₂ läuft in die Flanke 13 fast ohne Ecke bzw. Knickpunkt ein.

Auch der dritte Zahn 3₃ in der Zahngruppe besitzt eine abgerundete Schneidkante 10₃. Die Schneidkante 10₃ setzt sich auch hier aus einem geraden Stück 15₃ und zwei Bogenstücken 16₃ und 17₃ zusammen. Das Bogenstück 16₃ besitzt den Radius 18₃₁. Das Bogenstück 17₃ ist so angeordnet und wird von einem so ausgewählten Radius 18₃₂ bestimmt, dass es tangential in die Flanke 13 einläuft. Eine Ecke oder ein Abknickpunkt wird damit selbst am Übergang der Schneidkante 10₃ in die Flanke 13 vermieden. Der Übergang liegt etwas unterhalb der Stelle, an der der Zahn 3₃ seine größte Breite aufweist. Der Zahn 3₃ ist also breiter gestaltet als die Zähne 3₁ und 3₂. Mindestens einer der Zähne 3₁, 3₂ und 3₃ besitzt eine solche Formgebung, wie sie anhand des Zahns 3₃ beschrieben wurde. Es ist jedoch auch möglich, sämtliche Zähne 3 in der Zahngruppe in dieser Weise zu gestalten. Der Mittelpunkt des Radius 18₁ liegt auf der Längsmittelebene 14. Die Mittelpunkte der Radien 18₂₁ und 18₂₂ einerseits und die Mittelpunkte der Radien 18₃₁ und 18₃₂ andererseits können auf der Längsmittelebene 14 angeordnet sein, müssen es aber nicht. Eine Anordnung der Mittelpunkte der Radien pro Zahn und die entsprechende Ausbildung der Schneidkanten bzw. Schneidkantenabschnitte symmetrisch zur Längsmittelebene 14 ist jedoch bevorzugt, um einen Kraftangriff auf den einzelnen Zahn 3 beim Sägen zu verwirklichen, der in der Längsmittelebene 14 liegt.

Wenn von einer tangentialen Richtung oder einer Tangente die Rede ist, ist damit eine Richtung oder eine Tangente gemeint, die in oder etwa in der Zeichenebene der Fig. 5 liegt. Im Gegensatz dazu wird unter einer radialen Richtung oder radialen Tangente eine Richtung verstanden, die in der Längsmittelebene 14 oder einer dazu parallelen Ebene liegt, z. B. entsprechend sichtbar in den Darstellungen der Fig. 1, 6 und 14.

Aus Fig. 5 ist auch eine Höhen- und Breitenstufung der Zähne 3₁, 3₂ und 3₃ erkennbar. Der Zahn 3₁ ist der Zahn 3 mit der größten Höhe und geringsten Breite. Der Zahn 3₃ ist der Zahn 3 mit der geringsten Höhe und größten Breite. Der Zahn 3₂ liegt dazwischen. Die Reihenfolge der Zähne 3₁, 3₂ und 3₃ in Bandlaufrichtung 7 ist jedoch nicht zwingend. Die Zähne 3₁, 3₂ und 3₃ können gleiche oder auch jeweils unterschiedliche Spanwinkel 8 aufweisen. Auch die Freiwinkel 12 können variieren. Jeder Zahn 3₁, 3₂ und 3₃ arbeitet vorzugsweise nur mit dem Bereich seiner Schneidkante 10, der in der Projektion gemäß Fig. 5 frei übersteht. Auf diese Weise werden Materialstreifen im Schnittkanal ausgeräumt, wie dies bereits in dem eingangs beschriebenen Stand der Technik der Fall ist. Die Ausbildung von Ecken oder spitzen Abknickpunkten aneinander anschließender Radien 18 im Bereich der Scheidkanten 10 wird möglichst vermieden.

Bei der nicht erfindungsgemäßen Ausführungsform der Fig. 5 kann auch der dritte Zahn 3₃ entfallen. Dann ergibt sich eine Ausführungsform, die zwar eine Höhenstufung, aber keine Breitenstufung aufweist. Eine weitere Ausführungsform ergibt sich dann daraus, wenn ein dritter Zahn 3₃ hinzugefügt wird, der die gleiche Breite wie die beiden vorausgehenden Zähne aufweist, so dass in der Projektion alle Schneidkanten in einer Ecke 24₁ zusammenfallen.

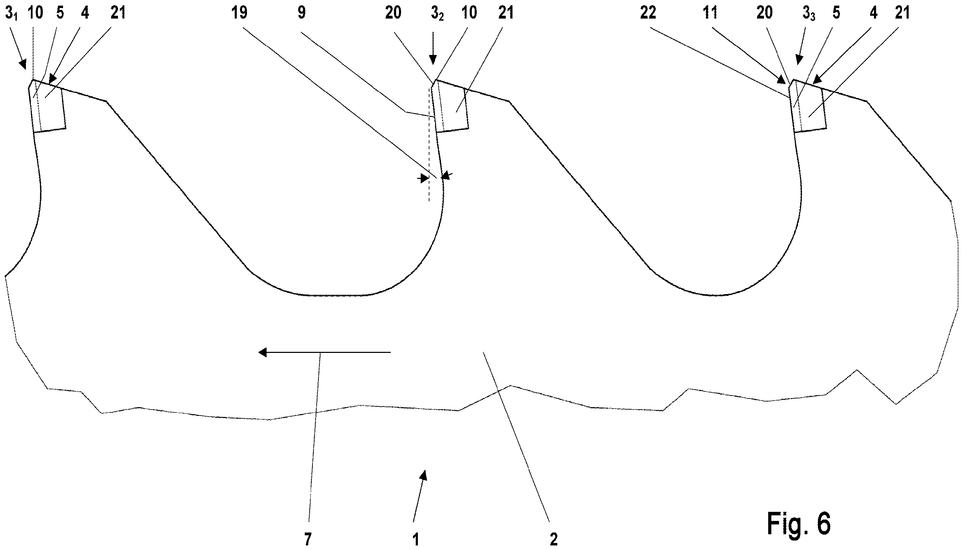

**Fig. 6** zeigt eine weitere Ausführungsform des Sägeblatts 1 mit seinem Grundkörper 2 und drei Zähnen 3₁, 3₂ und 3₃ in der Zahngruppe. Es versteht sich, dass die Anzahl der Zähne 3 in der Zahngruppe auch größer oder kleiner als drei sein kann. Die Zähne 3₁, 3₂ und 3₃ sind hier mit einem positiven Spanwinkel 19 angeordnet. Die Spanwinkel 19 der einzelnen Zähne 3₁, 3₂ und 3₃ kann übereinstimmend oder auch variierend ausgebildet sein. Gleiches gilt für die Teilung. Jede Spanfläche 9, die in positivem Spanwinkel 19 angeordnet ist, geht jedoch in ihrem oberen Bereich in eine negative Schutzfase 20 über. An den höchsten Punkten der Schutzfase 20 ergibt sich die Schneidkante 10. Die Schutzfase 20 erstreckt sich innerhalb der Schicht 5. Durch die Schutzfase 20 ergibt sich auch hier ein negativer Winkel im Bereich der Schneidkante 10.

Bereiche der Spanfläche 9, der Schutzfase 20 einschließlich der Schneidkante 10 können mit einer Hartstoffbeschichtung 22 versehen sein. Dies ist der Klarheit wegen nur an dem Zahn 3₃ in Fig. 6 dargestellt. Die Hartstoffbeschichtung 22 kann insbesondere aus Aluminiumtitannitrid, Titanaluminiumkarbonitrid oder Chromnitrid bestehen.

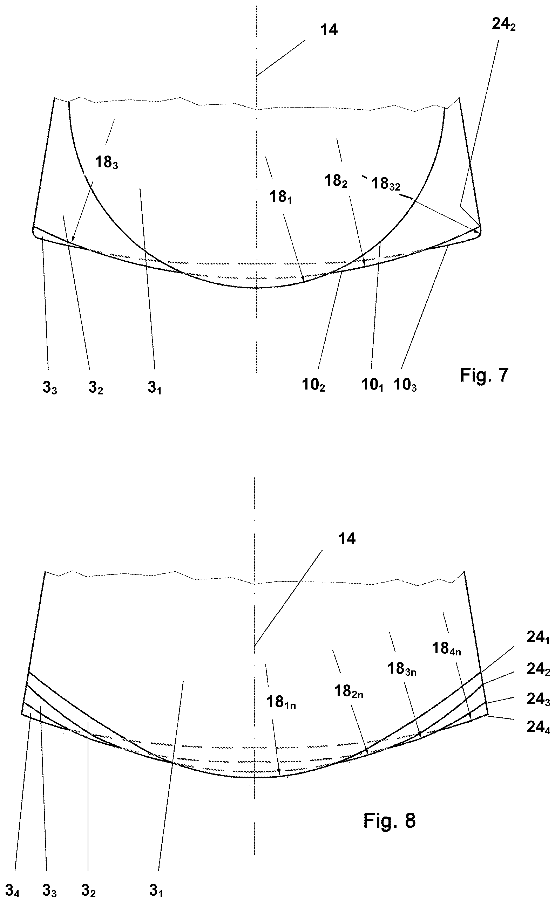

**Fig. 7** zeigt eine Projektion bzw. eine Ansicht entgegen der Bandlaufrichtung 7 von drei Zähnen 3₁, 3₂ und 3₃ einer Zahngruppe ähnlich der Darstellung in Fig. 5. Der Zahn 3₁ weist eine Schneidkante 10₁ mit einem Radius 18₁ auf. Der in der Zahngruppe folgende Zahn 3₂ weist eine Schneidkante 10₂ mit einem Radius 18₂ auf. Die Radien 18₁ und 18₂ sind unterschiedlich groß. Der Zahn 3₃ besitzt eine Schneidkante 10₃, die aus zwei Radien 18₃₁ und 18₃₂ zusammengesetzt ist. Auch die Radien 18₃₁ und 18₃₂ sind unterschiedlich groß. Der Radius 18₃₂ ist sehr klein bemessen. Die Radien 18₃₁ und 18₃₂ schließen tangential aneinander an. Der Zahn 3₁ weist die größte Höhe und die geringste Breite auf. Der Zahn 3₃ besitzt die geringste Höhe und die größte Breite. Der Zahn 3₃ besitzt, wie auch der Zahn 3₁, am Übergang zur Flanke 13 keine Ecke. Keiner der Zähne 3 der Zahngruppe besitzt zwischen den Flanken 13 eine Ecke oder Kante. Die Schneidkanten 10₁, 10₂ und 10₃ sind sämtlich durchgehend abgerundet. Der Zahn 3₃ bestimmt mit seinem Radius 18₃₂ die Oberflächengüte des Werkstücks im Schnittkanal. Der Zahn 3₂ besitzt eine mittlere Höhe und Breite. Er weist zwar eine Ecke 24₂ auf. Diese liegt jedoch geschützt unter der Projektion des Abschnitts der Schneidkante 10₃ mit dem Radius 18₃₂ und wird deshalb weniger beansprucht. Die Reihenfolge der Zähne 3 in der Zahngruppe kann auch anders als dargestellt sein.

**Fig. 8** zeigt eine Projektion bzw. eine Ansicht von vier Zähnen 3₁, 3₂, 3₃ und 3₄ einer Zahngruppe. Der Zahn 3₁ besitzt eine Schneidkante 10₁ mit einer Folge aneinander anschließender untereinander unterschiedlicher Radien 18₁ₙ, so dass sich insgesamt eine abgerundete Form mit außen liegenden Ecken 24₁ ergibt. Der Zahn 3₂ besitzt eine Schneidkante 10₂ mit einer Folge aneinander anschließender untereinander unterschiedlicher Radien 18₂ₙ, so dass sich insgesamt eine abgerundete Form mit außen liegenden Ecken 24₂ ergibt. Der Zahn 3₃ besitzt eine Schneidkante 10₃ mit einer Folge aneinander anschließender untereinander unterschiedlicher Radien 18₃ₙ, so dass sich insgesamt eine abgerundete Form mit außen liegenden Ecken 24₃ ergibt. Der Zahn 3₄ besitzt eine Schneidkante 10₄ mit einer Folge aneinander anschließender untereinander unterschiedlicher Radien 18₄ₙ, so dass sich insgesamt eine abgerundete Form mit außen liegenden Ecken 24₄ ergibt. Zumindest zwei Radien 18₁ₙ und 18₂ₙ sind unterschiedlich groß.

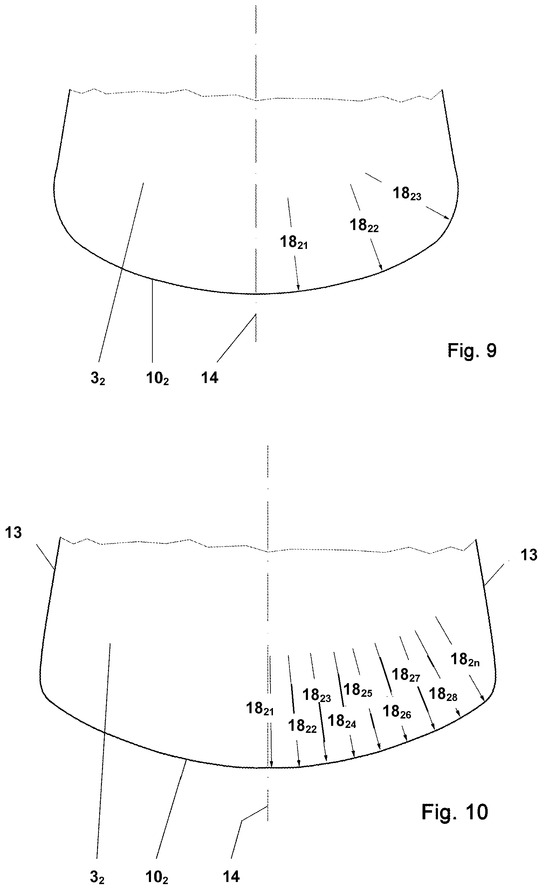

**Fig. 9** zeigt eine Projektion bzw. eine Ansicht eines Zahns 3 in einer Zahngruppe aus mindestens zwei Zähnen 3. Der Zahn 3₂ weist eine Schneidkante 10₂ auf, die aus unterschiedlichen Radien 18₂₁, 18₂₂ und 18₂₃ zusammengesetzt ist. Der Zahn 3₂ weist keine Ecke bzw. keinen spitzen Abknickpunkt auf. Die anderen Zähne 3 einer Zahngruppe können entsprechend gestaltet sein. Dabei kann auch eine Höhen- und Breitenstufung verwirklicht sein. Eine Breitenstufung kann auch fehlen, so dass zumindest die beiden Zähne der Zahngruppe gleiche Gesamtbreite aufweisen. Zumindest zwei Radien 18₁ₙ und 18₂ₙ sind unterschiedlich groß.

**Fig. 10** zeigt eine Projektion bzw. eine Ansicht eines Zahns 3 in einer Zahngruppe aus mindestens zwei Zähnen 3. Der Zahn 3₂ weist eine Schneidkante 10₂ auf, die aus einer Folge unterschiedlicher Radien 18₂₁, 18₂₂, 18₂₃, 18₂₄, usw. zusammengesetzt ist. Der Zahn 3₂ weist an seiner Schneidkante 10₂ weder zwischen den Flanken 13 noch am Übergang zu den Flanken 13 eine Ecke bzw. einen spitzen Abknickpunkt auf. Die anderen Zähne 3 einer Zahngruppe können entsprechend gestaltet sein. Dabei kann auch eine Höhen- und Breitenstufung verwirklicht sein. Zumindest zwei Radien 18₁ₙ und 18₂ₙ sind unterschiedlich groß.

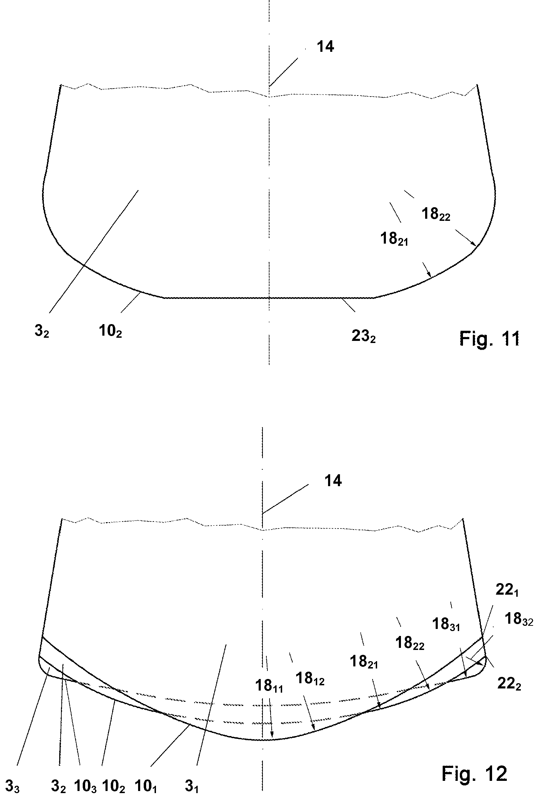

**Fig. 11** zeigt eine Projektion bzw. eine Ansicht eines Zahns 3 der Zahngruppe. Der Zahn 3₂ weist eine Schneidkante 10₂ auf, die aus einem gerade verlaufenden Schneidkantenabschnitt 23₂ und einer anschließenden Folge zweier Radien 18₂₁ und 18₂₂ auf jeder Seite zusammengesetzt ist. Der Zahn 3₂ weist außen, also am Übergang zur Flanke 13, keine Ecke auf. Auch an den anderen Übergangsstellen, z. B. zwischen dem geraden Schneidkantenabschnitt 23₂ und dem abgerundeten Schneidkantenabschnitt, der von dem Radius 18₂₁ gebildet wird, wird eine Ecke vermieden. Die anderen Zähne 3 einer Zahngruppe können entsprechend gestaltet sein. Dabei kann auch eine Höhen- und Breitenstufung verwirklicht sein. Der Zahn 3₂ wird in der Zahngruppe mit mindestens einem weiteren Zahn 3₁ kombiniert. Die Schneidkanten 10₁ und 10₂ bzw. Schneidenabschnitte der beiden Zähne 3₁ und 3₂ sind unter Verwendung zumindest zweier unterschiedlicher Radien 18₁₁ und 18₂₁ gebildet.

**Fig. 12** zeigt eine Projektion bzw. eine Ansicht von drei Zähnen 3₁, 3₂, und 3₃ einer Zahngruppe. Der Zahn 3₁ besitzt eine Schneidkante 10₁ mit zwei aneinander anschließenden unterschiedlichen Radien 18₁₁ und 18₁₂ so dass sich insgesamt eine abgerundete Form mit außen liegenden Ecken 22₁ ergibt. Der Zahn 3₂ besitzt eine Schneidkante 10₂ mit zwei aneinander anschließenden unterschiedlichen Radien 18₂₁ und 18₂₂, so dass sich insgesamt eine abgerundete Form mit außen liegenden Ecken 22₂ ergibt. Der Zahn 3₃ besitzt eine Schneidkante 10₃ mit zwei aneinander anschließenden unterschiedlicher Radien 18₃₁ und 18₃₂, so dass sich insgesamt eine abgerundete Form, hier am breitesten Zahn 3₃ jedoch ohne außen liegenden Ecken ergibt.

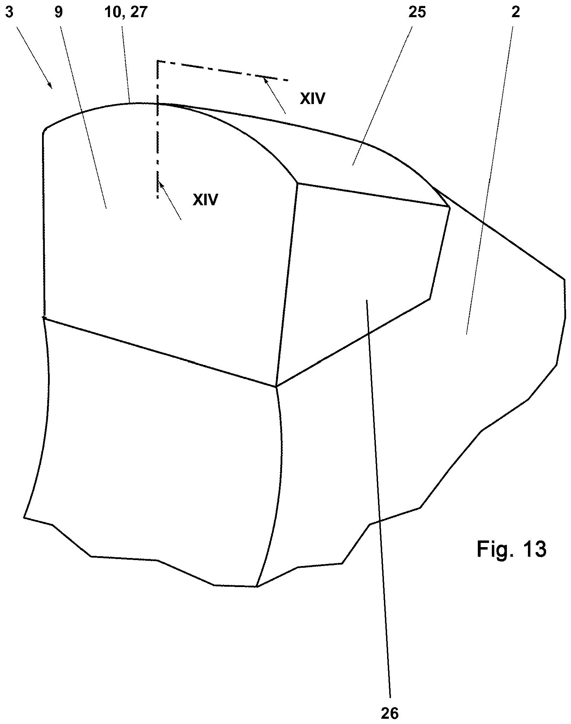

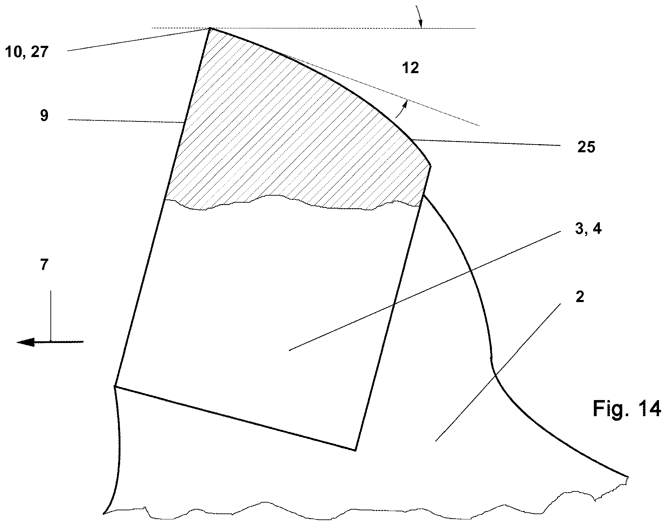

**Fig. 13** zeigt eine perspektivische Darstellung eines Zahns 3 mit Spanfläche 9, Schneidkante 10, Freifläche 25 und Flankenfläche 26. Die Darstellung soll erkennbar machen, dass die Flankenfläche 26 als in zwei aufeinander senkrecht stehenden Richtungen ebene Fläche ausgebildet ist. Die Freifläche 25 ist jedoch eine konvex gekrümmte Fläche, in Bandlaufrichtung 7 gesehen. Besonders deutlich wird dies durch die Schnittdarstellung in Fig. 14. Aber auch in der anderen Richtung senkrecht zur Längsmittelebene 14 ist die Freifläche 25 abgerundet, insbesondere entsprechend der Gestalt der Schneidkante 10.

Die Schneidkante 10 des Zahnes 3, die den Übergang von der Spanfläche 9 zu der Freifläche 25 darstellt, ist unter Verwendung eines Schneidkantenradius 27 geformt, gesehen in dieser Blickrichtung. Dies bezieht sich auf die Längsmittelebene 14 und dazu parallele Ebenen durch den Zahn 3. In Fig. 14 bildet sich dieser Schneidkantenradius 27 an einem Punkt der Schneidkante 10 ab.

**Fig. 14** zeigt den Schnitt gemäß der Linie XIV-XIV in Fig. 13. Es ist der Freiwinkel 12 angedeutet, mit dem die Freifläche 25 an der Schneidkante 10 bzw. am Ende des Schneidkantenradius 27 tangential beginnt. Die Freifläche 25 verläuft entgegen der Bandlaufrichtung 7 nach hinten immer unterhalb einer Ebene, die durch den Freiwinkel 12 bestimmt ist. Durch die Gestaltung der Freifläche 25 in ihrer konvex gekrümmten Form wird erreicht, dass die bei Benutzung des Sägeblatts im Bereich der Schneidkante 10 des Zahns 3 auftretenden Verschleißmarken vergleichsweise kürzer und kleiner werden, so dass die mögliche Einsatzdauer des Sägeblatts 1 vorteilhaft erhöht wird.

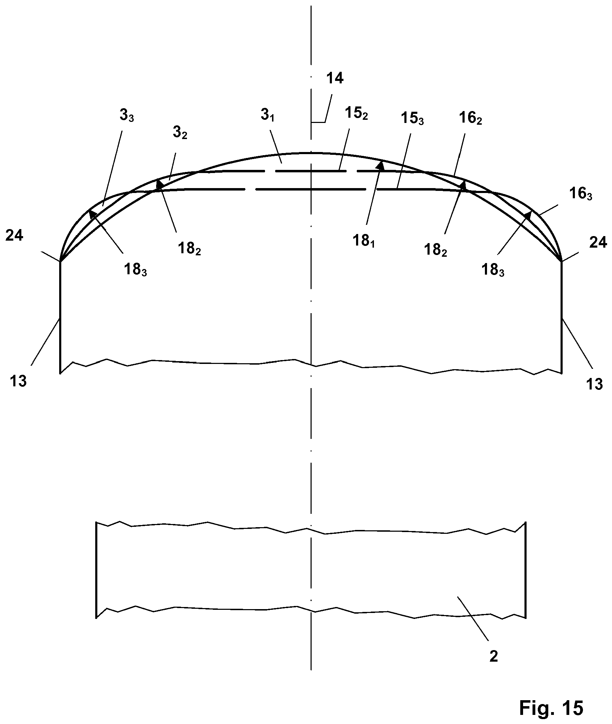

Eine weitere nicht erfindungsgemäßen Ausführungsform ist in **Fig. 15** dargestellt. Dort findet ein Flankenwinkel von 0° Anwendung, d. h. die Flanken 13 der Zähne 3 fallen nicht nur in der Projektion zusammen, sondern erstrecken sich auch parallel zur Längsmittelebene 14. Der Zahn 3₁, der die größte Höhe aufweist, wird durch einen einzigen Radius 18₁ gebildet, dessen Mittelpunkt auf der Längsmittelebene 14 liegt. Der Zahn 3₂ besitzt im mittleren Bereich ein gerades Stück 15₂, an welches sich in zur Längsmittelebene 14 symmetrischer Weise Schneidkantenabschnitte in Form eines Bogenstücks 16₂ anschließen. Auch diese Ausbildung ist also symmetrisch zur Längsmittelebene 14 verwirklicht. Der Zahn 3₃ besitzt in seinem mittleren Bereich ein gerades Stück 15₃ und in den äußeren Bereichen je ein Bogenstück 16₃, welches von einem Radius 18₃ gebildet wird. Die Mittelpunkte der beiden Radien 18₂ müssen nicht unbedingt auf der Längsmittelebene 14 liegen. Sie liegen aber symmetrisch verteilt zur Längsmittelebene 14. Entsprechendes gilt für die beiden Radien 18₃. Die Schneidkanten sämtlicher Zähne 3₁, 3₂, 3₃ laufen in einer gemeinsamen Ecke 24 zusammen. Die Zähne 3 besitzen damit eine übereinstimmende Breite. Die Wirkbreite jedes Zahns 3 ist entsprechend kleiner gemäß dem Überstand bei der Projektion festgelegt, so dass das Sägeband 1 streifenförmige Materialbereiche aus dem Schnittkanal ausräumt, die sich insgesamt zu der Gesamtbreite der Zähne 3 ergänzt.

Um zu verdeutlichen, dass die Zähne 3₁, 3₂ und 3₃ mit gleicher Breite eine größere Breite als der Grundkörper 2 aufweisen, die Formkörper 4 also seitlich überstehen, ist im Vergleich zu der Zahngestaltung auch der zugehörige Teil des Grundkörpers 2 dargestellt. Es versteht sich, dass bei dieser grundsätzlich erkennbaren Relation zwischen der Breite des Grundkörpers 2 und der Breite der Zähne 3 die Schneidkanten 10 der Zähne 3 auch so gestaltet werden können, wie dies aus den anderen Ausführungsformen erkennbar ist.

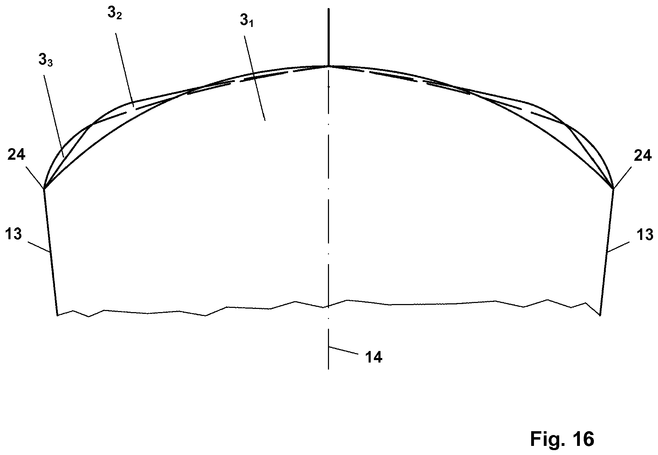

Eine weitere nicht erfindungsgemäßen Ausführungsform des Sägeblatts 1 ist in **Fig. 16** verdeutlicht. Auch hier ist eine Projektion von drei hintereinander befindlichen Zähnen 3 in der Zahngruppe dargestellt. Die Schneidkanten 10 der Zähne 3₁, 3₂ und 3₃ können an sich in beliebiger Weise gestaltet sein, also mit Verwendung unterschiedlicher Radien, wie dies aus allen anderen Ausführungsformen hervorgeht. Die Besonderheit dieser Ausführungsform besteht jedoch darin, dass alle Zähne 3₁, 3₂ und 3₃ in der Längsmittelebene 14 gleiche Höhe und auch gleiche Breite aufweisen. Die Höhenstufung ergibt sich außerhalb der Längsmittelebene 14. Die Form der Schneidkante 10 an jedem Zahn 3 kann mit Verwendung unterschiedlicher Radien und Bogenstücken zusammengesetzt sein.

### BEZUGSZEICHENLISTE

- 1: Sägeblatt
- 2: Grundkörper
- 3: Zahn
- 4: Formkörper
- 5: Schicht
- 6: Sitz
- 7: Bandlaufrichtung
- 8: Spanwinkel
- 9: Spanfläche
- 10: Scheidkante
- 11: Schneide
- 12: Freiwinkel
- 13: Flanke
- 14: Längsmittelebene
- 15: gerades Stück
- 16: Bogenstück
- 17: Bogenstück
- 18: Radius
- 19: Spanwinkel
- 20: Schutzfase
- 21: Träger
- 22: Hartstoffbeschichtung
- 23: Schneidkantenabschnitt
- 24: Ecke
- 25: Freifläche
- 26: Flankenfläche
- 27: Schneidkantenradius

## Patentansprüche

1. Sägeblatt (1), mit
einem Grundkörper (2), und
ungeschränkten, symmetrisch zu einer Längsmittelebene (14) durch den Grundkörper (2) ausgebildeten Zähnen (3), die mindestens eine sich wiederholende Zahngruppe bilden, wobei
die Zahngruppe mindestens zwei Zähne (3₁, 3₂) mit zumindest abschnittsweise abgerundeten Schneidkanten (10) aufweist, wobei die abgerundete Schneidkante (10₁) des einen Zahns (3₁) von mindestens einem ersten Radius (18₁) und die abgerundete Schneidkante (10₂) des anderen Zahns (3₂) von mindestens einem zweiten Radius (18₂) gebildet ist,
die Zähne (3₁, 3₂) in einer Höhenstufung angeordnet sind, und
die Zähne (3₁, 3₂) derart in einer Breitenstufung angeordnet sind, dass der Zahn (3₁) mit der größten Höhe zugleich die geringste Breite aufweist, **dadurch gekennzeichnet, dass** der zweite Radius (18₂) des niedrigeren Zahns (3₂) größer als der erste Radius (18₁) des höheren Zahns (3₁) ist.

2. Sägeblatt (1) nach Anspruch 1, **dadurch gekennzeichnet, dass** die zumindest abschnittsweise abgerundete Schneidkante (10) mindestens eines Zahns (3i) der Zahngruppe aus mindestens zwei Radien (18₁₁, 18₁₂) zusammengesetzt ist.

3. Sägeblatt (1) nach Anspruch 2, **dadurch gekennzeichnet, dass** die zwei Radien (18₁₁, 18₁₂) der zumindest abschnittsweise abgerundeten Schneidkante (10) unter Vermeidung einer Ecke (24) abgerundet, insbesondere tangential, aneinander anschließend vorgesehen sind.

4. Sägeblatt (1) nach mindestens einem der Ansprüche 1 bis 3, **dadurch gekennzeichnet, dass** die zumindest abschnittsweise abgerundete Schneidkante (10) mindestens eines Zahns (3) der Zahngruppe tangential in die Flanken (13) des Zahns (3) übergehend vorgesehen ist.

5. Sägeblatt (1) nach mindestens einem der Ansprüche 1 bis 4, **dadurch gekennzeichnet, dass** mindestens ein Zahn (3) der Zahngruppe im Bereich des Zahnrückens eine in der einen Richtung abgerundete und in der anderen Richtung konvex gekrümmte Freifläche (25) aufweist.

6. Sägeblatt nach mindestens einem der Ansprüche 1 bis 5, **dadurch gekennzeichnet, dass** die Schneidkante (10) zwischen Spanfläche (9) und Freifläche (25) verrundet ist und einen Schneidkantenradius (27) zwischen 15 µm und 45 µm, insbesondere zwischen 15 µm und 30 µm, aufweist.

7. Sägeblatt (1) nach mindestens einem der Ansprüche 1 bis 6, **dadurch gekennzeichnet, dass** die Zähne (3₁, 3₂) in der Zahngruppe als Formkörper (4) aus Hartmetall ausgebildet sind, die mit dem Grundkörper (2) dauerhaft verbunden sind.

8. Sägeblatt (1) nach mindestens einem der Ansprüche 1 bis 6, **dadurch gekennzeichnet, dass** die Zähne (3₁, 3₂) in der Zahngruppe als Formkörper (4) ausgebildet sind, die jeweils einen Träger (21) aus Hartmetall und eine Schicht (5) mit einer Härte von mindestens 5.000 HK aufweisen, wobei die Träger (21) mit dem Grundkörper (2) dauerhaft verbunden sind.

9. Sägeblatt (1) nach Anspruch 8, **dadurch gekennzeichnet, dass** die Schicht (5) der Zähne (3₁, 3₂) in der Zahngruppe aus PKD oder CBN besteht.

10. Sägeblatt (1) nach mindestens einem der Ansprüche 1 bis 9, **dadurch gekennzeichnet, dass** die Zähne (3) einen Spanwinkel (8) im Bereich zwischen -10° und 20°, im Rückenbereich einen Freiwinkel (12) im Bereich zwischen 0° und 15° und eine negative Schutzfase (20) in einem Fasenwinkel im Bereich zwischen 0° und -25° aufweisen.

## Claims

1. A saw blade (1), comprising:
a base body (2), and
unset teeth (3) being symmetrically formed with respect to a longitudinal center plane (14) through the base body (2), the teeth (3) forming at least one repeated group of teeth, wherein
the group of teeth includes at least two teeth (3₁, 3₂) having cutting edges (10) of which at least sections are rounded, the rounded cutting edges (10₁) of one tooth (3₁) being formed by at least one first radius (18₁) and the rounded cutting edge (10₂) of the other tooth (3₂) being formed by at least one second radius (18₂),
the teeth (3₁, 3₂) are arranged in a height gradation, and
the teeth (3₁, 3₂) are arranged in a width gradation such that the tooth (3₁) having the greatest height at the same time has the smallest width, **characterised in that**
the second radius (18₂) of the lower tooth (3₂) is greater than the first radius (18₁) of the higher tooth (3₁).

2. The saw blade (1) of claim 1, **characterised in that** the cutting edge (10), of which at least a section is rounded, of at least one tooth (3₁) of the group of teeth is composed of at least two radii (18₁₁, 18₁₂).

3. The saw blade (1) of claim 2, **characterised in that** the two radii (18₁₁, 18₁₂) of the cutting edge (10), of which at least a section is rounded, is rounded in a way to avoid a corner (24), and that the two radii (18₁₁, 18₁₂) are located next to one another, especially tangentially.

4. The saw blade (1) of at least one of claims 1 to 3, **characterised in that** the cutting edge (10), of which at least a section is rounded, of at least one tooth (3) of the group of teeth is arranged to merge tangentially into the flank of the tooth (3).

5. The saw blade (1) of at least one of claims 1 to 4, **characterised in that** at least one tooth (3) of the group of teeth in the region of the tooth back includes a clearance surface (25) being rounded in one direction and being convexly curved in the other direction.

6. The saw blade (1) of at least one of claims 1 to 5, **wherein** the cutting edge (10) is rounded between the face (9) and the clearance surface (25) and includes a cutting edge radius (27) between 15 µm and 45 µm, especially between 15 µm and 30 µm.

7. The saw blade (1) of at least one of claims 1 to 6, **characterised in that** the teeth (3₁, 3₂) in the group of teeth are designed as form bodies (4) of carbide being permanently connected to the base body (2).

8. The saw blade (1) of at least one of claims 1 to 6, **characterised in that** the teeth (3₁, 3₂) in the group of teeth are designed as form bodies (4) each including a carrier (21) of carbide and a layer (5) having a hardness of at least 5,000 HK, the carrier (21) being permanently connected to the base body (2).

9. The saw blade (1) of claim 8, **characterised in that** the layer (5) of the teeth (3₁, 3₂) in the group of teeth is made of PCD or CBN.

10. The saw blade (1) of at least one of claims 1 to 9, **characterised in that** the teeth (3) have a rake angle (8) in a region of between -10° and 20°, a clearance angle (12) in the back portion in a region between 0° and 15° and a negative protecting chamfer (20) having a chamfer angle in a region between 0° and -25°.

## Revendications

1. Lame de scie (1), avec
un corps de base (2), et
des dents (3) non avoyées, qui sont constituées de façon symétrique à un plan médian longitudinal (14) traversant le corps de base (2) et qui forment un groupe de dents récurrent,
le groupe de dents présentant au moins deux dents (3₁, 3₂) avec des arêtes de coupe (10) arrondies au moins par tronçons, l'arête de coupe (10₁) arrondie d'une dent (3₁) étant formée d'au moins un premier rayon (18₁), et l'arête de coupe (10₂) arrondie de l'autre dent (3₂) étant formée d'au moins un deuxième rayon (18₂),
les dents (3₁, 3₂) étant disposées dans un étagement de hauteur, et
les dents (3₁, 3₂) étant disposées dans un étagement de largeur de telle sorte que la dent (3₁) ayant la plus grande hauteur présente en même temps la plus petite largeur,
**caractérisée en ce que**
le deuxième rayon (18₂) de la dent (3₂) la plus basse est plus grand que le premier rayon (18₁) de la dent (3₁) la plus haute.

2. Lame de scie (1) selon la revendication 1, **caractérisée en ce que** l'arête de coupe (10) arrondie au moins par tronçons d'au moins une dent (3₁) du groupe de dents est composée d'au moins deux rayons (18₁₁, 18₁₂).

3. Lame de scie (1) selon la revendication 2, **caractérisée en ce que** les deux rayons (18₁₁, 18₁₂) de l'arête de coupe (10) arrondie au moins par tronçons sont prévus à la suite l'un de l'autre, de préférence de façon tangentielle, en étant arrondis en évitant un angle (24).

4. Lame de scie (1) selon au moins l'une des revendications 1 à 3, **caractérisée en ce que** l'arête de coupe (10), arrondie au moins par tronçons, d'au moins une dent (3) du groupe de dents est prévue en se transformant tangentiellement en flancs (13) de la dent (3).

5. Lame de scie (1) selon au moins l'une des revendications 1 à 4, **caractérisée en ce que,** dans la zone du dos de dent, au moins une dent (3) du groupe de dents présente une face de dépouille (25) arrondie dans une direction et courbée de façon convexe dans l'autre direction.

6. Lame de scie (1) selon au moins l'une des revendications 1 à 5, **caractérisée en ce que** l'arête de coupe (10) est arrondie entre la face de coupe (9) et la face de dépouille (25) et présente un rayon d'arête de coupe (27) entre 15 µm et 45 µm, en particulier entre 15 µm et 30 µm.

7. Lame de scie (1) selon au moins l'une des revendications 1 à 6, **caractérisée en ce que** les dents (3₁, 3₂) dans le groupe de dents sont constituées en tant que corps façonnés (4) en métal dur qui sont raccordés solidement au corps de base (2).

8. Lame de scie (1) selon au moins l'une des revendications 1 à 6, **caractérisée en ce que** les dents (3₁, 3₂) dans le groupe de dents sont constituées en tant que corps façonnés (4) qui présentent respectivement un support (21) en métal dur et une couche (5) avec une dureté d'au moins 5000 HK, les supports (21) étant raccordés solidement au corps de base (2).

9. Lame de scie (1) selon la revendication 8, **caractérisée en ce que** la couche (5) des dents (3₁, 3₂) dans le groupe de dents est composée de diamant polycristallin ou de CBN.

10. Lame de scie (1) selon au moins l'une des revendications 1 à 9, **caractérisée en ce que** les dents (3) présentent un angle de coupe (8) dans la plage entre -10° et 20°, dans la zone de dos un angle de dépouille (12) dans la plage entre 0° et 15°, et un chanfrein de protection négatif (20) dans un angle de chanfrein dans la plage entre 0° et -25°.
